# EUROPEAN PATENT APPLICATION

(11) **EP 1 681 898 A1**
(43) Date of publication of application: **19.07.2006**
(21) Application number: 05290101.4
(22) Date of filing: 17.01.2005
(51) Int. Cl.: H04Q 11/04

(54) **Method of providing multimedia communications over a DSL access network**

(71) Applicant: ALCATEL, 75008 Paris (FR)
(72) Inventor: Schmidt, Hartmut, Dipl.-Ing. (FH), 71723 Grossbottwar (DE)
(74) Representative: Zinsinger, Norbert

(57) **Abstract**

The invention concerns a method of providing voice and/or multi-media communication over a DSL access network as well as a DSL access multiplexer (21) and at least one integrated access device (32). The DSL access multiplexer (21) and the integrated access device (32) are connected via a subscriber line (42). A voice/multi-media session is established via the DSL access network, wherein data of the voice/multi-media sessions are transported in form of IP packets by using a real time protocol. An AAL2 circuit (72 to 75) is allocated to the voice/multi-media session. The headers of the packets of the voice/multi-media session are compressed and AAL2 circuits (72 to 75) allocated to voice/multi-media sessions are used as underlying tunnel layer.

The header compressed packet of the voice/multi-media session are multiplexed into the allocated AAL2 circuits (72 to 75) and the header compressed packets are transported via the allocated AAL2 circuits (72 to 75) between the integrated access device (32) and the DSL access multiplexer (21) through the DSL access network.

## Description

The present invention relates to a method of providing voice and/or multi-media communications over a DSL access network comprising at least on DSL access multiplexer and at least one integrated access device connected via a subscriber line, as well as an integrated access device and a DSL access multiplexer for supporting such voice and/or multi-media communications over the DSL access network (DSL = Digital Subscriber Line).

Today's DSL access networks are mainly utilized for internet communication. Typically, separate bandwidth ranges are used to transport broadband traffic, i.e. internet traffic, and narrowband traffic, i.e. voice traffic over a digital subscriber line. The frequency ranges for accessing and providing broadband and narrowband communications are divided by splitters.

For example, the so-called asymmetric digital subscriber line (= ADSL) provides a high-speed down-link and a low-speed up-link and is primarily suitable for end-users to use the internet. Often, the services is combined with an ISDN basic rate access (ISDN = Integrated Service Digital Network).

For example, WO 99/51019 describes a solution for providing in parallel an ADSL service and ISDN or POTS service to the customer (ISDN = Integrated Services Digital Network; POTS = Plain Old Telephone Service). At a telephone company location, a central office terminal such as a line card provides an analog telephone line POTS. In parallel, an ADSL modem receives broadband data from the internet. Both, the POTS and ADSL signal are connected to a splitter which provides both, the POTS and ADSL service, to a customer premises. At the customer premises, a splitter receives the POTS and ADSL signals and separates them. The ADSL signal provided from the splitter is connected to an ADSL modem which is connected to Ethernet. In this configuration, two splitters are needed, one at telephone company location and the other at customer premises.

According to this approach, voice communication (POTS, ISDN) and concurrent internet traffic are transported within separated frequency ranges over the subscriber line.

Further, the singer-pair high-speed digital subscriber line (= SHDSL) provides additional support for narrow band by packetizing of narrowband and transporting it into this form over the subscriber line. SHDSL transceivers are designed primarily for duplex operation over mixed gauge-two-wire twisted metallic pairs. Optional four-wire operation is supported for extended applications. Optional signal regeneration for both single-pair and two-pair operations are specified, as well. SHDSL transceivers are capable of supporting selected symetric user data rates in the range of 192 kb/s to 2.312 kb/s using a Trellis coded pulse amplitude modulation (TC-PAM) line code. They are designed to be spectrally compatible with other transmission technologies deployed in the access network, including other DSL technologies.

SHDSL transceivers do not support the use of analog splitting technology for a coexistent with either analog PSTN technology or ISN. But, narrowband transport is possible within inband TDM channels (TDM = Time Division Multiplex).

Further, the symetric single-pair high bit rate digital subscriber line (SDSL) provides a bi-directional symetric high-bit rate transmission on a single metallic wire pair. Like ADSL, it provides digital access over existing, unshielded wire pairs. The frame structure provides the flexibility to transport variable payload bit rates from 192 kb/s up to 2.312 kb/s and the option of plesiochronous or synchronous mode.

Further it is known to transport voice traffic over IP networks by means of a real time protocol (= RTP). In today's DSL access networks, IP traffic such as internet, e.g. HTTP or FTP (HTTP = Hypertext Transfer Protocol; FTP = File Transfer Protocol) and IP based multi-media traffic, e.g. VoIP (= Voice over IP), are transported over a common communication channel. Today's DSL systems handles IP packets transporting voice or multi-media information as part of the internet traffic. They do not differentiate on the content of IP packets nor the used protocols at the upper protocol levels, e.g. whether its a UDP or TCP datagram (IP = Internet Protocol, UDP = User Datagram Protocol; TCP = Transaction Control Protocol).

It is the object of the present invention to improve communication over a DSL access network.

The object of the present invention is achieved by a method of providing voice and/or multi-media communications over a DSL access network comprising at least one DSL access multiplexer and at least one integrated access device connected via a subscriber line (DSL = Digital Subscriber Line), wherein the method comprises the steps of: establishing an IP based voice/multi-media session via the DSL access network (IP = Internet Protocol); transmitting data of the voice/multi-media session in form of IP packets by using a real time protocol; allocating an AAL2 circuit to the voice/multi-media session (AAL2 = ATM Adaptation Layer 2); compressing the header of the packets of the voice/multi-media session and using AAL2 circuits allocated to voice/multi-media sessions as underlying tunnel layers for header compressions; multiplexing the header compressed packets of the VoIP/multi-media session into the allocated AAL2 circuit; and transporting the header compressed packets via the allocated AAL2 circuit between the integrated access device and the DSL access multiplexer through the DSL access network. The object of the present invention is further achieved by an integrated access device for supporting voice and/or multi-media communications over a DSL access network, wherein the integrated access device comprises a DSL transceiver arranged to provide a plurality of AAL2 circuits for exchange of data with a DSL access multiplexer over a subscriber line connecting the integrated access device with said DSL access multiplexer; and a media stream controller arranged to receive data of IP based voice/multi-media sessions in form of IP packets handled by a real time protocol, allocate an AAL2 circuit of the DSL transceiver to each IP based voice/multi-media session, compress the headers of the packets of the voice/multi-media sessions and use the allocated AAL2 circuits as underlying tunnel layer for header compression, multiplex the headers compressed packets of voice/multi-media sessions into the allocated AAL2 circuits and transfer the header compressed packets via the allocated AAL2 circuits to the DSL access multiplexer. The object of the present invention is further achieved by a DSL access multiplexer supporting voice and/or multi-media communication over a DSL access network, wherein the DSL access multiplexer comprises a DSL transceiver arranged to provide a plurality of AAL2 circuits for exchange of data with at least one integrated access device of the DSL access network over a subscriber line connecting the DSL access multiplexer with said integrated access device, and a media stream control arranged to receive data of IP based voice/multi-media sessions in form of IP packets handled by a real time protocol, allocate an AAL2 circuit of the DSL transceiver to each voice/multi-media session, compress the headers of the packets of the voice/multi-media sessions and using the allocated AAL2 circuits as underlying tunnel layer for header compression, multiplex the header compressed packets of voice/multi-media sessions into the allocated AAL2 circuits and transfer the header compressed packets via the allocated AAL2 circuits to the integrated access device.

The invention applies a special treatment on IP packets transporting voice and/or multi-media content. Such packets are transported in a header compressed form via allocated AAL2 bearer. Concurrent internet traffic, i.e. IP packets that do not transport such streaming data switched via another bearer. This approach improves both, bandwidth and quality of service behavior. Further, the invention improves the protection from intrusion through the internet and enables a parallel operation of multi-media and internet services. The invention prevents that the multi-media service is impact by the internet service. This includes effects on packet delay, packet loss and packet jitter, but also effects with regard to intrusion or attack from the internet side.

Further advantages are achieved by the embodiments of the invention indicated by the dependent claims.

According to a preferred embodiment of the invention, data of voice/multi-media sessions and concurrent internet traffic are transported via different ATM circuits through the DSL access network. The ATM layer is utilized to ensure the quality of service and the strict separation of the traffic flows. Preferably, an ATM VPINCI with a constant bit rate (CBR) or real-time-variable bit rate (rt-VBR) class of service is specified for each voice/multi-media communication (VPI = Virtual Path Identifier; VCI = Virtual Channel Identifier).

A voice/multi-media session refers to any communication session such as VoIP session having the need to transfer streaming data over IP, e.g. real-time voice or video data.

Preferably, the concurrent internet traffic user VPI/VCI with a specific bit rate (UBR) which means that the internet traffic gets the remaining bandwidth, up to the multi-media communication took the required. According to a preferred embodiment of the invention, the concurrent internet traffic is transported with one or more AAL5 (= ATM adaptation layer 5) circuits.

Dependent on the entrance point of the multi-media session, a media stream controller located at an integrated access device, a DSL access multiplexer or an access media gateway allocates an AAL2 circuit of the ATM layer to the IP based multi-media session, compresses the header of the packets of the multi-media session and multiplex the header compressed packets of the multi-media session into the allocated ALL2 circuit of the ATM layer that is used as underlying tunnel layer for header compression. A correspondent media stream controller at the other edge of the DSL access network decompresses the header of the multi-media packet received via the allocated ALL2 circuit and converts the received packets in their original form , i.e. in the form of IP packets handled by a real time protocol. Preferably, a NAT function applies at this point (NAT = Network Address Translation); i.e. the original packet header is not restored. This will allow translating the addresses from a private IP address range into for instance a public one. The transformation of IP domains is controlled by the softswitch with for instance the H.248 (MEGACO) control protocol.

Preferably, one AAL2 circuit of the ATM layer is reserved for the transport of control protocol data of the control protocols controlling the multi-media session. For example data referring to the SIP protocol (SIP = Session Initiation Protocol) or H.323 used for control the multi-media session are exchanged via this separated AAL2 circuit. This approach gains further improvements in the efficiency of bandwidth usage. Since DSL is limited in its bandwidth by the geographical distance and the characteristic of the two or four wire subscriber line, this approach in addition remarkably improves the quality of service in case of need to support multiple multi-media sessions concurrently.

Preferably, the ATM layer releases the bandwidth reserved for an AAL2 tunnel allocated to a voice/multi-media session, as soon as the voice/multi-media session is terminated. This makes the released bandwidth available for the transport of concurrent internet traffic and thereby improves the efficiency of bandwidth usage within the DSL access network.

According to a preferred embodiment of the invention, the DSL access multiplexer switches the multi-media communication and the internet traffic differently. The multi-media communication will be switched to an access media gateway, e.g. a "Session Border Controller" or "MIDDLE BOX" (IETF MIDCOM), the voice/multi-media operators entry point. The internet traffic will be switched to a B-RAS (= Broadband Remote Access Server). The access media gateway preferably uses media streams switching to control the subscriber flow. Media stream switching can also be used in the integrated access device to detect multi-media flows for further processing. Preferably, the entry point of a multi-media communication, e.g. the integrated access device, the DSL access multiplexer or the access media gateway has a detection unit for recognizing IP based voice/multi-media sessions established through the DSL access network. This detection unit separates this kind of IP traffic from the rest of the IP traffic, i.e. internet traffic, and routes the data assigned to voice/multi-media sessions to the dedicated media stream controller of the respective edge of the DSL access network.

These as well as other features and advantages of the invention will be better appreciated by reading the following detailed description of presently preferred examplary embodiments taken in conjunction with the accompanying drawings of which:
- Fig. 1: is a block diagram of a communication system comprising a DSL access network.
- Fig. 2: is a block diagram showing details of the communication system of Fig. 1.
- Fig. 3: is a functional view exemplifying a protocol stack used for providing voice and/or multi-media communications over the DSL access network of Fig. 1.

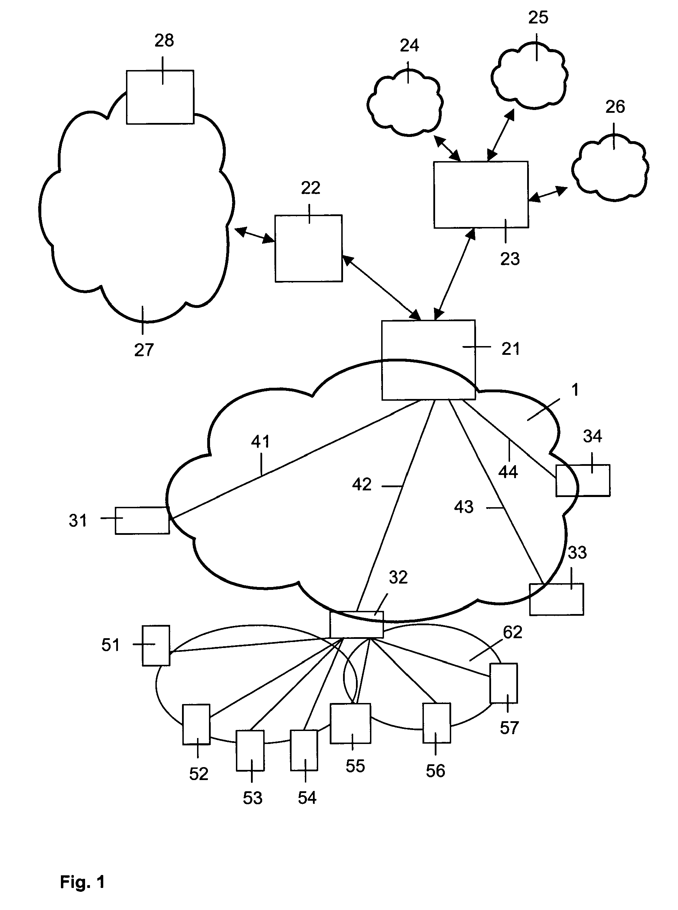

Fig. 1 shows a DSL access network 1, an IP network 27, Internet service provides 24 to 26, a broadband access server 23, an access media gateway 22, a DSL access multiplexer 21, integrated access devices 31, 32, 33, 34, and a plurality of terminals 51 to 57 connected with the integrated access device 32.

The DSL access network 1 is constituted of one or more DSL access multiplexer, e.g. the DSL access multiplexer 21 shown in Fig. 1, and a plurality of integrated access devices, e.g. the integrated access devices 31 to 34 shown in Fig. 1. The DSL access multiplexers of the DSL access network 1 are connected via subscriber lines with one or more integrated access devices. For example, subscriber lines 41, 42, 43 and 44 connect the DSL access multiplexer 21 with the integrated access devices 31, 32, 33 and 34, respectively. The subscriber lines 41 to 44 are unshielded metallic twisted pair lines usually used to connect phones with associated local exchanges or concentrators. Preferably, already available subscriber lines of a POTS system (POTS = Plain Old Telephone Service) are used as subscriber lines 41 to 44. For example, the subscriber lines 41 to 44 are two-wire or four-wire twisted, unshielded copper wires.

The integrated access devices 31 to 34 are DSL network termination nodes capable to connect one or more terminals through the DSL access network. For example, the integrated access device 32 is connected with the terminals 51 to 57. Preferably, the integrated access devices 31 to 34 provide interfaces to connect different kinds of terminals with the integrated access device. The details of the integrated access devices 31 to 34 are in the following exemplified by hand of the integrated access device 32.

The integrated access device 32 provides both, voice and data services to connected terminals. For example, it provides voice services 61 to the terminals 51, 52, 53, 54 and 55 and data services to the terminals 55, 56 and 57. The terminal 51 is an ISDN telephone that is connected via a subscriber line with an ISDN plug socket of the integrated access device 32. The terminal 52 is an analog telephone that is connected via a subscriber line with a POTS plug socket of the integrated access device 32. The terminal 53 is a DECT telephone set that is connected via a radio interface with the integrated access device 32. Further, it is possible that the integrated access device 32 is connected with one or more external base stations that provide the radio interface for the DECT communication (DECT = Digital Enhanced Cordless Telephone).

The terminal 54 is an IP-telephone providing telephone services by means of a VoIP communication controlled by a SIP protocol (SIP = Session Initiation Protocol). The terminal 54 is, for example, connected via a LAN or wireless LAN, for example based on an Ethernet protocol, with the integrated access device 32.

The terminal 56 is a computer, for example a laptop, connected with a LAN, a wireless LAN or via a WiFi connection with the integrated access device 32. The terminal 56 is a fax machine connected with a POTS plug socket or via a LAN with the integrated access device 32. The terminal 57 is a gaming device used for online gaming, for example a personal computer executing such gaming software.

The terminal 55 is a multi-media terminal, for example a computer, that provides multi-media communication services to the user. The terminal 55 is connected via a LAN, wireless LAN or WiFi with the integrated access device 32.

The DSL access multiplexer 21 is, for example, a line card terminating a number of subscriber lines at a telephone company location. The DSL access multiplexer 21 is connected with the access multi-media gateway 22 and with the broadband access server 23. The access media gateway is, for example, a "Session Border Controller" or an "Access Border Gate". Voice and multi-media communications are transferred via the access multi-media gateway 22 and the remaining part of the data traffic is transferred via the broadband access server 23. Beside the DSL access multiplexer 21, a plurality of further DSL access multiplexers of the DSL access networks 1 terminating further subscriber lines of the DSL access network 1 are connected with the access multi-media server 22 and the broadband access server 23, too. The IP network 27 is an IP network managed by a soft-switch, for example a soft-switch 28. The soft-switch 28 performs, beside other functionalities, the function of a SIP server used to establish VoIP connections or other kind of multi-media connections exchanging streaming contents through the IP network 27. Further, it is possible that the IP network 27 is the internet and the server 28 represents a SIP server or a H.323 infrastructure used to support the establishment of VoIP/multi-media connections through the internet.

The broadband access server 23 provides internet access for the terminals connected via the DSL access network 1. Dependent on the internet service provider selected by the respective subscriber, it provides internet access via one of the internet service providers 24, 25 and 26.

Voice/multi-media communication and pure data communication are handled in a different way. Data of voice/multi-media sessions, e.g. data of the voice service 61, are transferred in form of IP packets by using a real time protocol. The integrated access device 32 allocates an AAL2 circuit to such IP based voice/multi-media session. It compresses the header of the packets of the voice/multi-media sessions and using the AAL2 circuits allocated to voice/multi-media sessions as underlying tunnel layer for header compression. It multiplexes the header compressed packets of the voice/multi-media sessions into the allocated AAL2 circuits and transports the header compressed packets via the allocated AAL2 circuit over the subscriber line 42 to the DSL access multiplexer 21. The multiplexer 21 forwards the packets of the voice/multi-media session to the access media gateway 22. In contrast to this, the integrated access device 32 transports concurrent data traffic, e.g. internet traffic of the data service 62, in a different way through the DSL access network 1. This traffic is transported via different ATM circuits through the DSL access network 1 and transferred by the DSL access multiplexer 21 to the broadband access server 23. By means of the ATM sublayer, the issue of quality of service and separation of services is solved. Further, header compression of the IP based media streams makes it possible to support multiple multi-media sessions within the constraints caused by the limited bandwidth of DSL connections. Due to the use of the allocated AAL2 circuits as underlying tunnel layer for header compression, the overhead of the RTP/IP protocol stack (RTP+UDP+ IP = 40 bytes and 20ms G.729a coder = 20 bytes) can be drastically reduced. Further, the use of different AAL2 circuits for concurrent multi-media sessions helps to guarantee the fairness between concurrent multi-media sessions.

Preferably, the integrated access device 32 applies payload compression mechanisms on the payloads of voice/multi-media packets. For instance in a VoIP session, the voice payload can be compressed to 8 kbps with a G.729a coder.

Payload compression only applies in case of narrowband subscriber. For instance a SIP phone or a PC based softphone provides own resources for voice compression. In this case, the IAD only acts on the packet bearer layer and does not process any media layer (payload).

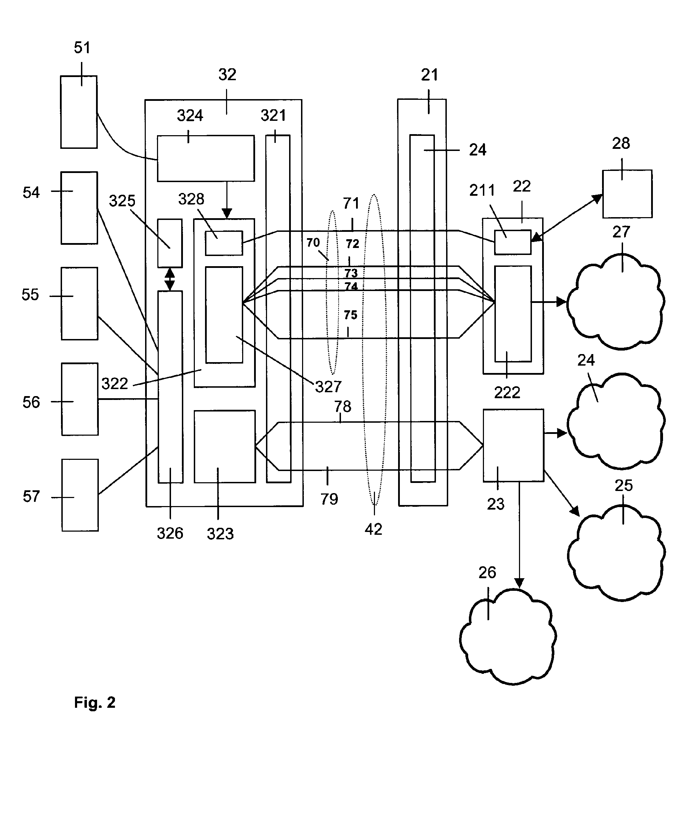

Fig. 2 exemplifies the details of the integrated access device 32.

Fig. 2 shows the integrated access device 32 connected with the terminals 51, 54, 55, 56 and 57, the DSL access multiplexer 21, the access media gateway 22, the soft-switch 28, the IP network 27, the broadband access server 23 and the internet service providers 24, 25 and 26.

The integrated access device 32 comprises an electronic circuit having at least one microprocessor and a memory with a software program executed by the at least one microprocessor, and electronic components for terminating the communication interfaces provided by the integrated access device 32. The functionalities of the integrated access device 32 are provided by the execution of the aforementioned software programs at the hardware platform of the integrated access device 32. From functional point of view, the integrated access device 32 comprises a DSL transceiver 321, a media stream controller 322, a VoIP converter 324, an IP router 323, an Ethernet transceiver 326 and a detection unit 325.

The DSL transceiver 321 provides a ATM communication service based on a DSL transmission protocol, for example based on Trellis coded pulse amplitude modulation. The DSL transceiver 321 supports AAL2 and AAL5 communication services. AAL2 provides bandwidth-efficiency transmission of low-rate short and variable packets in a delay sensitive application. It supports VBR and CBR (VBR = Variable Bit Rate; CBR = Constant Bit Rate). AAL2 is subdivided into the common part sublayer (CPS) and the Service Specific Convergence Sublayer (= SSCS). CPS packets consist of 3 octet header followed by a payload. An AAL2 CPS packet contains 8 bit CIT (= Channel Identification), 6 bit LI (= Length Indicator), 5 bit UUI (User-to-User Identification), 5 bits HEC (Header Area Control) and 1 to 45/64 bite information payload. The payload is not limited to 64 byte. The transport of header compressed packets could be as described in the IETF draft "draft-buffam-avtcrtp-over-aal2-01.txt" from Bruce Thompson et al.. The SSCS packets conveys narrowband calls consisting of voice, voiceband data or circuit mode data. SSCS packets are transported as CPS packets over AAL2 connections. The CPS packet contains a SSCS payload. Details of the AAL2 layer are, for example, illustrated in ITU-T 1.363.2.

The VoIP converter 324 performs conversion between analog and/or digital voice data exchanged via a ISDN or POTS plug socket of the integrated access device 32 and an associated VoIP communication. For example, it provides a gateway functionality for the terminal 51 that is an IDSN telephone set. It converts the incoming voice signal into a stream of IP-packets handled by a real time protocol and forwards the resulting packet stream to the media control 322. Further, it terminates SIP/RTP/UDP/IP packet streams received from the multi-media controller 322 and outputs the resulting voice signal to the addressed terminal, e.g. one of the terminals 51 to 53.

The Ethernet transceiver 326 provides an IP based communication with the terminals 54, 55, 56 and 57 connected with the integrated access device 32 over a LAN.

Optionally, the integrated access device 23 is equipped with the detection unit 325. The detection unit 325 recognizing VoIP multi-media sessions established via the integrated access device 32. It scans the data streams received via the Ethernet transceiver 326 and searches for IP communication using an RTP/IP communication stack. The IP packets are addressed to the IAD. Therefore, the IP packets do not need to be scanned. In this case, the IAD acts line a "Back-to-Back-Server". Further, it is possible that the detection unit 325 classifies a set of terminals, for example the terminal 54 which is a VolP phone, as multi-media terminals and assumes that such terminals solely involved in voice/multi-media sessions. If the detection unit 325 recognizes a VoIP/multi-media session established via the integrated access device 32, it routes the packets assigned to this voice/multi-media session to the media stream control 322. The rest of the data streams are routed to the IP router 323. Optionally, the IP router 323 additionally performs firewall functionalities.

The media stream controller 322 comprises a call agent 328 and a header compression unit 327.

Each voice/multi-media session will take one AAL2 circuit. The first AAL2 circuit is reserved for control protocols, for example the SIP protocol. AAL2 can support up to 248 circuits. 247 circuit can be used for multi-media communication sessions. For example, Fig. 2 shows a bundle 70 of AAL2 circuits 71 to 75, wherein the AAL2 circuit 71 is used to transport control protocols and the AAL2 circuits 72 to 75 are used to transport packets of IP based voice/multi-media communication sessions. If a multi-media communication is to be established, the media controller 322 allocates a AAL2 circuit, for example the AAL2 circuit 72 to the voice/multi-media session. Bandwidth will be allocated to this AAL2 circuit by means of AAL2 SVCs. This will ensure reserved bandwidth all along between the integrated access device 32 and the access media gateway 22. If a session is terminated, AAL2 SVC communication will release the reserved bandwidth. A session admission control mechanism makes sure that no more bandwidth is requested than is available physically. The header compression unit 327 compresses the header of the received packets of voice/multi-media sessions and uses the allocated AAL2 circuits, e.g. the AAL2 circuits 72 to 75, as underlying tunnel layer for header compression. It multiplexes the header compressed packets into the allocated AAL2 circuits and transfers the compressed packets by means of the DSL transceiver 321 over the subscriber line 42.

The first AAL2 circuit, e.g. the AAL2 circuit 71, is used for transfer of control protocols (e.g. SIP or H.323). The control protocols will use a PPP frame for communication (PPP = Point-to-Point Protocol). PPP will also be used for user authentication and IP address assignment of the integrated access device 32. Protocols such as TCP will ensure the reliability of the control communication.

The concurrent internet communication will use one or more AAL5 circuits with unspecific bit rate service (UBR) for transmission through the DSL access network 1. For example, Fig. 2 shows two AAL5 circuits 78 and 79 used by the IP router 323 for transporting general IP traffic over the subscriber line 42. Since this IP traffic uses a VPI/VCI with unspecific bit rate (UBR), internet will get the remaining bandwidth after the voice/multi-media communications took the required.

The DSL access multiplexer 21 contains a DSL transceiver 24 terminating the subscriber line 42. The DSL transceiver 24 provides the same functionalities as the DSL transceiver 321, that means it provides an ATM layer based on a DSL transportation layer. Further, the DSL access multiplexer routes the ATM circuits allocated to the voice/multi-media communications to the access media gateway 22 and the ATM circuits allocated to internet communications to the broadband access server 23.

The access media gateway 22 comprises a media stream controller having a signaling gateway 211 and a header processing unit 222. The header processing unit 22 decompresses the header of the packets received over the tunnel layer and de-converts the received packets to voice/multi-media session data in form of IP packets handled by a real time protocol.

Preferably, each of the media controllers 327 and 222 has the ability to compress/decompress the headers of the voice/multi-media sessions to enable a full duplex voice/multi-media communication over the DSL access network 1.

According to a further embodiment of the invention, the functionalities of the header processing unit 22 and of the signaling gateway 211 are implemented in the DSL access multiplexer 21. Preferably, the DSL access multiplexer 21 is in such case not longer connected with an access media gateway, but solely exchanges IP data via the broadband access server 23. In such case, the IP packet streams relating to voice/multi-media communications as well as IP packet streams relating to typical internet traffic are combined/split by the DSL access multiplexer 21. Preferably, the DSL access multiplexer contains in such case in addition a detection unit arranged as the detection unit 325 of the integrated access device 32 that recognizes media streams transported via IP packets and routes such IP packet streams to the media controller of the DSL access multiplexer 21.

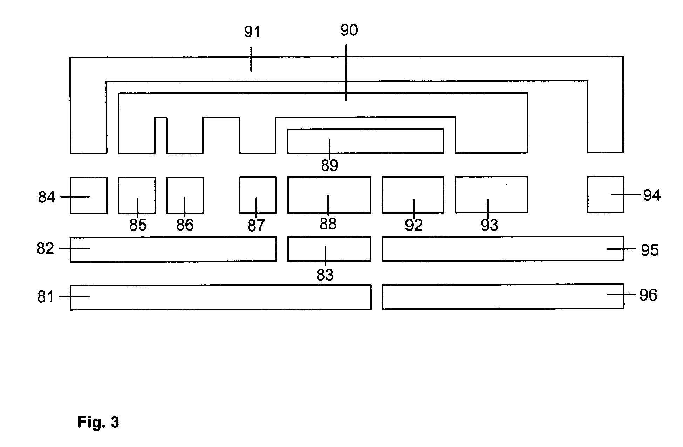

Fig. 3 shows an embodiment of protocol stacks and protocol conversion functions used for the transport of voice/multi-media communications over the DSL access network 1.

Fig. 3 shows an ATM layer 81, an AAL2 CPS PDU layer 82, an AAL5 PVC layer 83, an AAL2 PVC layer 84, various AAL2 SVC layers 85 to 87, a TCP/UDP/IP/PPP layer 88, a firewall and router function 89, a compression/decompression layer 90, a SIP/B2BUA layer, a TCP/UDP layer 92, an UDP layer 93, a TCP layer 94, an IP layer 85 and an LAN layer 96.

In this example, a multi-media terminal concurrently having a multi-media communication and a typical internet communication. The multi-media tunnel is connected via the LAN layer 96 and the IP layer 85 with the integrated access device 32. The integrated access device performs the compression/decompressions of headers an the multiplexing into the appropriate AAL2 circuit. A back-to-back user agent (B2BUA) provides PBX functionality. The B2BUA talks SIP with the multi-media terminal over the customer premises network and SIP with the public soft-switch 28 over the TCP/IP/PPP/AAL2 link.

## Claims

1. A method of providing voice and/or multi-media communications over a DSL access network (1) comprising at least one DSL access multiplexer (21) and at least one integrated access device (31, 32, 34) connected via a subscriber line (41, 42, 43, 44), the method comprising the steps of:
establishing an IP based voice/multi-media session via the DSL access network (1);
transmitting data of the voice/multi-media session in form of IP packets by using a real time protocol;
allocating an AAL2 circuit (71 to 75) to the IP based voice/multi-media session;
compressing the header of the packets of the voice/multi-media session and using AAL2 circuits (72 to 75) allocated to voice/multi-media sessions as underlying tunnel layer for header compression;
multiplexing the header compressed packets of the voice/multi-media session into the allocated AAL2 circuit (72 to 75); and
transporting the header compressed packets via the allocated AAL2 circuit (72 to 75) between the integrated access device (32) and the DSL access multiplexer (21) through the DSL access network (1).

2. The method of claim 1,
**characterized in**
**that** the method comprises the further step of transporting data of voice/multi-media sessions and concurrent internet traffic via different ATM circuits (72 to 75; 78 to 79) through the DSL access network (1).

3. The method of claim 1,
**characterized in**
**that** the method comprises the further step of assigning a constant bit rate class of service to AAL2 circuits (72 to 75) allocated to voice/multi-media sessions.

4. The method of claim 3,
**characterized in**
**that** the method comprises the further step of transporting the concurrent internet traffic via one or more AAL5 circuits (78, 79) with unspecific bit rate through the DSL access network (1).

5. The method of claim 1,
**characterized in**
**that** the method comprises the further step of allocating a separate AAL2 circuit (71) for the transport of control protocol data of one or more control protocols controlling the IP based voice/multi-media session.

6. The method of claim 1,
**characterized i n**
that the method comprises the further step of releasing the bandwidth reserved for the AAL2 circuit (72 to 75) allocated to the voice/multi-media session, if the voice/multi-media session is terminated.

7. Integrated access device (31, 32, 33, 34) for supporting voice and/or multi-media communications over a DSL access network (1), wherein the integrated access device (32) comprises: a DSL transceiver (321) arranged to provide a plurality of AAL2 circuits (71 to 75) for exchange of data with a DSL access multiplexer (21) over a subscriber line (42) connecting the integrated access device (32) with said DSL access multiplexer (21); and a media stream controller (322) arranged to receive data of IP based voice/multi-media sessions in form of IP packets handled by a real time protocol, allocate an AAL2 circuit (72 to 75) of the DSL transceiver (321) to each IP based voice/multi-media session, compress the headers of the packets of the VoIP/multi-media sessions and use the allocated AAL2 circuits (72 to 75) as underlying tunnel layer for header compression, multiplex the header compressed packets of VoIP/multi-media sessions into the allocated AAL2 circuits (72 to 75) and transfer the header compressed packets via the allocated AAL2 circuits (72 to 75) to the DSL access multiplexer (21).

8. The integrated access data of claim 7,
**characterized in**
**that** the media stream controller is arranged to receive header compressed packets transferred via AAL2 circuits (72 to 75) of the DSL transceiver (321) to the integrated access device (32), to decompress the header of the received packets and convert the received packets to voice/multi-media session data in form of IP packets handled by a real time protocol, and to output that voice/multi-media session data.

9. The integrated access device (32) of claim 7,
**characterized in**
**that** the integrated access device (32) comprises a detection unit (325) for recognizing IP based voice/multi-media sessions established via the integrated access device (21) and routing data assigned to the voice/multi-media sessions to the media stream controller (322).

10. A DSL access multiplexer supporting voice and/or multi-media communications or a DSL access network (1), wherein the DSL access multiplexer comprises: a DSL transceiver (24) arranged to provide a plurality of AAL2 (71 to 75) circuits for exchange of data with at least one integrated access device (31, 32, 33, 34) of the DSL access network (1) over a subscriber line (41, 42, 43, 44) connecting the DSL access multiplexer with the integrated access device (31, 32, 33, 34); and a media stream controller (222) arranged to receive data of IP based voice/multi-media sessions in form of IP packets handled by a real time protocol, allocate an AAL2 circuit (72 to 75) of the DSL transceiver (24) to each IP based voice/multi-media session, compress the headers of the packets of the voice/multi-media sessions and using the allocated AAL2 circuits (72 to 75) as underlying tunnel layer for header compression, multiplex the header compressed packets of the voice/multi-media sessions into allocated AAL2 circuits (72 to 75) and transfer the header compressed packets via the allocated AAL2 circuits (72 to 75) to the integrated access device (32).
